Europäisches Patentamt

European Patent Office

Office européen des brevets

(11) Veröffentlichungsnummer: **0 124 474**
**A1**

# (12) EUROPÄISCHE PATENTANMELDUNG

(21) Anmeldenummer: **84810059.0**

(22) Anmeldetag: **01.02.84**

(51) Int. Cl.³: **F 01 N 3/02,** F 01 N 1/10

(30) Priorität: **04.02.83 CH 627/83**

(43) Veröffentlichungstag der Anmeldung: **07.11.84**
**Patentblatt 84/45**

(84) Benannte Vertragsstaaten: **IT**

(71) Anmelder: **D'Alessandro, Luigi, Geerenstrasse 12,**
**CH-8157 Dielsdorf (CH)**

(72) Erfinder: **D'Alessandro, Luigi, Geerenstrasse 12,**
**CH-8157 Dielsdorf (CH)**

(54) **Auspuffeinrichtung.**

(57) Es wird eine Auspuffeinrichtung vorgeschlagen, bei der das aus dem Motor austretende Abgas nicht in direktem Durchgang in die Umgebungsluft gelangt.

Das freie Ende des Auspuffrohres ist verschlossen, wobei im Bereich des freien Endes in der Rohrmantelwand Öffnungen angeordnet sind. Diese Öffnungen sind fahrbahnseitig ausgerichtet.

Zur Reinigung des Abgases sind im Behälter zusätzlich Filter angeordnet.

Zur Schalldämpfung ist der Behälter entlang seiner Mangelfläche mit einer Auskleidung versehen.

Durch die einfache Konstruktion ist die vorgeschlagene Auspuffeinrichtung wirtschaftlich in der Herstellung. Zudem bringt sie einen wesentlichen Beitrag zum Umweltschutz.

ACTORUM AG

D'ALESSANDRO LUIGI;                    8157 Dielsdorf

## Auspuffeinrichtung

Die vorliegende Erfindung bezieht sich auf eine Auspuffeinrichtung an Motorfahrzeugen mit einer von einem Gehäuse umschlossenen Anordnung von Rohren, wobei die Endbereiche der Rohre diametral aus dem Gehäuse herausragen derart, dass ein Rohrende mit dem Motor in Verbindung steht und mindestens ein weiteres Rohrende von der vom Motor abgekehrten Gehäuseseite wegragt.

Bekannte Auspufftopfanlagen weisen einen praktisch glatten Durchgang für die bei Verbrennungsmotoren austretenden Abgase auf. Dabei gelangen die Abgase direkt durch das offene Ende des Auspuffrohres in die Umgebungsluft.

Der vorliegenden Erfindung liegt die Aufgabe zugrunde, eine Auspuffeinrichtung vorzuschlagen, die geeignete Mittel zur Schalldämpfung einerseits und zur Reinigung andererseits aufweist, und eine direkte Belastung der Umgebungsluft verhindert. Zudem soll eine wirtschaftliche und konstruktiv einfache Ausführung möglich sein.

Die Aufgabe wird erfindungsgemäss dadurch gelöst, dass das Rohrende (7a, 8a) verschlossen ist und mindestens im vom Gehäuse (2) herausragenden Bereich (7b, 8b) in der Rohrmantelwand Oeffnungen (9) aufweist, und dass im Gehäuse (1) gasdurchlässige Mittel zur Reinigung und Schalldämpfung angeordnet sind, welche die Rohranordnung mindestens teilweise umgeben.

Weitere vorteilhafte Ausgestaltungen gehen aus den abhängigen Ansprüchen hervor.

Ein bevorzugtes Ausführungsbeispiel des erfindungsgemässen Auspufftopfes ist in den Figuren dargestellt und wird im folgenden näher beschrieben.

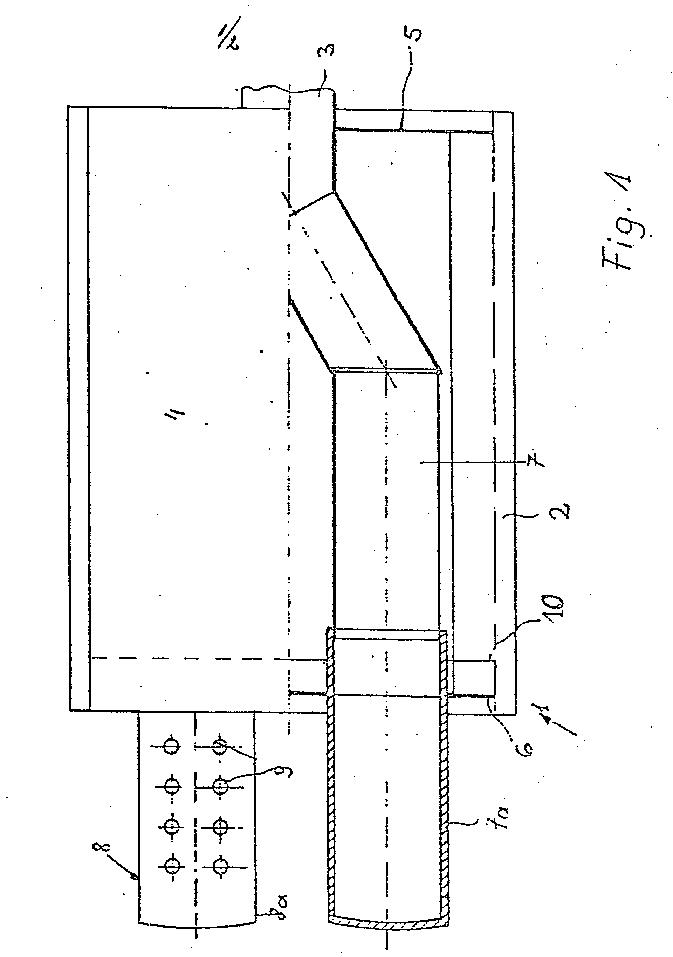

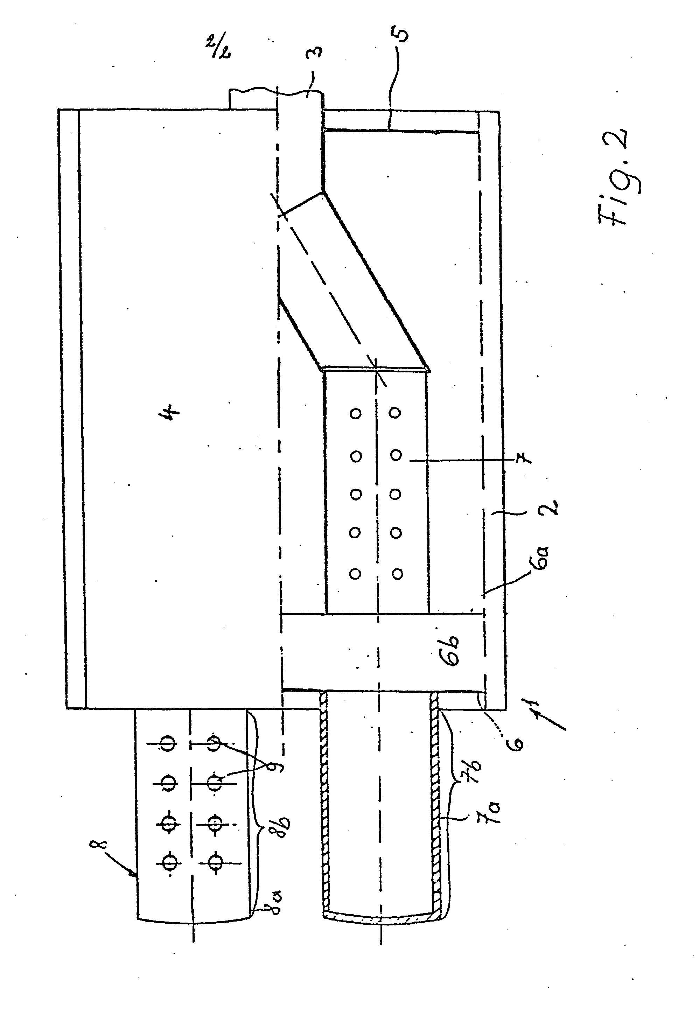

In der Figur 1 ist, teilweise im Schnitt, eine Auspuffeinrichtung dargestellt. Ein Gehäuse 2 umschliesst eine Rohranordnung, die mittels des Rohres 3 mit dem Motor (nicht dargestellt) in Verbindung steht. Das Gehäuse 2 weist eine Mantelwand 4 auf. Diese kann auch aus zwei Teilen bestehen, die dann zusammengeschweisst oder -gebördelt werden. Das Gehäuse ist an beiden Enden mittels einer Wand 5 bzw. 6 abgeschlossen, wobei in der Wand Oeffnungen für die Rohrdurchgänge vorhanden sind.

An Rohr 3 sind im Gehäuse Rohrteile 7 und 8 angeschweisst, die eine Verzweigung bilden und sich ihrerseits aus mehreren Teilen zusammensetzen. Der Endbereich 7a bzw. 8a der beiden Rohre ist an ihren jeweiligen Enden verschlossen und weist gegen die Fahrbahn gerichtete Oeffnungen 9 auf. Diese Oeffnungen dienen als Auslass für die aus dem Motor austretenden Gase. Sie können in parallel verlaufenden Reihen oder versetzt angeordnet sein. Die Oeffnungen sind vorzugsweise kreisförmig. In Versuchen hat es sich gezeigt, dass optimale Resultate mit acht Oeffnungen erzielt wurden.
Der Durchmesser der Oeffnungen kann variiert werden.

Parallel zur Wand 6 des Behälters 2 ist eine weitere Wand 10 bzw. 6a angeordnet. Zwischen diesen beiden Wänden ist eine Filteranordnung vorgesehen, die zur Reinigung des austretenden Abgases dient. Zur Verstärkung der Reinigungswirkung kann zusätzlich noch Glaswolle angeordnet sein. Zusätzlich kann die Filteranordnung keramische Teile und/oder Metallspäne aufweisen. Die Innenwand 4 des Gehäuses 2 weist eine Auskleidung 4a auf, die als Schalldämpfer vorgesehen ist. Diese Auskleidung kann aus Glaswolle bestehen oder aus einem anderen geeigneten Material.

Eine andere Ausführungsvariante der beschriebenen Auspuffeinrichtung besteht darin, dass der Rohrverlauf vom Motor durch
den Behälter nicht durchgehend ist. Dabei wird von der Behälterwand und einer von dieser beabstandeten Wand 6a eine Kammer
gebildet. Die Wand 6a ist vorzugsweise perforiert, um die Zirkulation der Gase zu begünstigen. Die Rohrenden werden in der jeweiligen Wand mittels einer Schweisskonstruktion festgehalten.

Durch die Verwendung der beschriebenen Ausführung einer Auspuffeinrichtung kann ein wesentlicher Beitrag zum Umweltschutz geleistet werden.

– 1 –

Patentansprüche

1. Auspuffeinrichtung an Motorfahrzeugen mit einer von einem Gehäuse umschlossenen Anordnung von Rohren, wobei die Endbereiche der Rohre diametral aus dem Gehäuse herausragen derart, dass ein Rohrende mit dem Motor in Verbindung steht und mindestens ein weiteres Rohrende von der vom Motor abgekehrten Gehäuseseite wegragt, dadurch gekennzeichnet, dass das Rohrende (7a, 8a), verschlossen ist und mindestens im vom Gehäuse (2) herausragenden Bereich (7b, 8b) in der Rohrmantelwand Oeffnungen (9) aufweist, und dass im Gehäuse (1) gasdurchlässige Mittel zur Reinigung und Schalldämpfung angeordnet sind, welche die Rohranordnung mindestens teilweise umgeben.

2. Auspuffeinrichtung nach Anspruch 1, dadurch gekennzeichnet, dass die Mittel zur Reinigung und Schalldämpfung eine Filteranordnung ist.

3. Auspuffeinrichtung nach Anspruch 2, dadurch gekennzeichnet, dass die Filteranordnung Füllkörper aus Metall und/oder Keramik aufweist.

4. Auspuffeinrichtung nach Anspruch 3, dadurch gekennzeichnet, dass die Filteranordnung zusätzlich Glaswolle aufweist, die entlang der Gehäusewand (4) anliegt.

- 2 -

5. Auspuffeinrichtung nach Anspruch 1, dadurch gekennzeichnet,
   dass die Oeffnungen (9) in fahrbahnseitiger Richtung angeordnet sind.

6. Auspuffeinrichtung nach Anspruch 5, dadurch gekennzeichnet,
   dass die Oeffnungen kreisförmig sind.

7. Auspuffeinrichtung nach Anspruch 1, dadurch gekennzeichnet,
   dass im Gehäuse (2) eine Kammer (6b) angeordnet ist, in der
   die Mittel zur Reinigung und Schalldämpfung untergebracht sind.

8. Auspuffeinrichtung nach Anspruch 7, dadurch gekennzeichnet,
   dass der Rohrverlauf durch die Kammer (6b) nicht durchgehend
   ist.

9. Auspuffeinrichtung nach Anspruch 1, dadurch gekennzeichnet,
   dass die Rohranordnung im Gehäuse (2) mindestens eine Rohrverzweigung aufweist.

10. Auspuffeinrichtung nach Anspruch 1, dadurch gekennzeichnet,
    dass in der Rohrmantelwand des im Gehäuse (2) verlaufenden
    Rohrbereiches (7) Oeffnungen vorgesehen sind.

Fig. 1

00124474

Fig. 2

0012447 4

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A- 345 300 (ANDREWS) <br><br> * Seite 1, Zeile 41 - Seite 2, Zeile 19; Figuren 1,2 * | 1-3,6-8,10 | F 01 N 3/02 <br> F 01 N 1/10 |
| Y | FR-A- 366 275 (PRATT) <br><br> * Seite 1, Zeilen 14-62; Figuren 1,2 * | 1,6,8,10 | |
| Y | US-A-3 960 509 (ABRIANY) <br><br> * Spalte 2, Zeilen 21-56; Spalte 3, Zeilen 49-62; Figuren 1,5 * | 1,2,9,10 | |
| A | GB-A-1 206 105 (FORTHERGILL) <br><br> * Seite 1, Zeile 63 - Seite 2, Zeile 38; Figuren 1,3 * | 1,4,5,8 | RECHERCHIERTE SACHGEBIETE (Int. Cl. 3) |
| A | US-A-1 521 074 (CARR) <br> * Seite 1, Zeilen 36-79; Figuren 1-4 * | 1,5,6 | F 01 N |
| A | US-A-2 112 534 (KEEN) <br> * Seite 2, Absatz 2; Figuren 1,4 * | 1,6 | |
| A | FR-A-2 432 610 (URSO) <br> * Seite 4, Zeilen 2-7, 23-31; Figuren * | 3,4 | |
| | --- -/- | | |

Der vorliegende Recherchenbericht wurde für alle Patentansprüche erstellt.

| Recherchenort <br> DEN HAAG | Abschlußdatum der Recherche <br> 23-07-1984 | Prüfer <br> HAKHVERDI M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

00124474

Nummer der Anmeldung

EP 84 81 0059

**Europäisches Patentamt**

**EUROPÄISCHER RECHERCHENBERICHT**

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 408 721 (DAIMLER-BENZ) * Seite 2, Zeilen 21-38; Figuren 1-3 * | 3 | |
| | --- | | |
| A | US-A-2 558 023 (WALSH) * Spalte 1, Zeilen 1-14; Figur 1 * | 5 | |
| | ----- | | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 23-07-1984 | HAKHVERDI M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82